# EUROPEAN PATENT SPECIFICATION

(11) **EP 0 372 656 B1**
(45) Date of publication and mention of the grant of the patent: **07.06.1995**
(21) Application number: 89203087.5
(22) Date of filing: 05.12.1989
(51) Int. Cl.: C08G 64/12, C08G 63/685, C08G 65/40

(54) **Polymers comprising spirolactam units**
Polymere, die Spirolactameinheiten enthalten
Polymères comprenant des unités de spirolactame

(30) Priority: 05.12.1988 US 279671; 23.02.1989 US 314516; 23.02.1989 US 314515; 23.02.1989 US 314514
(43) Date of publication of application: 13.06.1990
(73) Proprietor: SHELL INTERNATIONALE RESEARCH MAATSCHAPPIJ B.V., 2596 HR Den Haag (NL)
(72) Inventor: Wang, Pen Chung, Houston Texas 77079 (US)

(56) References cited:
- US-A- 4 847 388

## Description

This invention relates i.a. to certain novel polycarbonate polymers. In a certain aspect, the invention relates to novel copolymers which incorporate carbonyl moieties alternating with moieties of a 1,6-diazaspiro[4.4]nonane-2,7-dione having oxyaryl-containing substituents on the spiro ring nitrogen atoms, and optionally, di(oxyphenyl)alkane moieties.

The class of polycarbonate polymers is broadly known in the art. An early review article by Schnell, Industrial and Engineering Chemistry, Vol. 51, No. 2, pp. 157-160 (1959) describes properties of the class of polycarbonates and methods known in the art at that time for the preparation of polycarbonate polymers including certain polycarbonate polymers which are now commercial. In general, the polycarbonate polymers are thermoplastics whose glass transition temperatures will depend upon the nature and symmetry of the groups incorporated into the polycarbonate chain other than the carbonyldioxy groups. Most polycarbonates are derived from a bisphenol and commercial polycarbonates are frequently derived from 2,2-di(4-hydroxyphenyl)propane, also known as bisphenol A or BPA. The polycarbonate polymers are conventionally produced by reaction of a bisphenol or an alkali metal salt thereof with phosgene or by ester exchange with a diaryl carbonate, particularly diphenyl carbonate.

These polymers are processed by conventional methods employed for thermoplastics such as injection molding or extrusion into films, sheets, fibers, tubing and shaped articles. The articles produced from polycarbonate polymers demonstrate good resistance to oxygen, heat and light as well as to common solvents. While some of the polycarbonate polymers have moderately high glass transition temperatures and thus could be marginally useful as engineering thermoplastics in applications where exposure to elevated temperatures is likely to be encountered, many of the polycarbonate polymers have sufficiently low glass transition temperatures so that the usefulness of such polymers is thereby limited. The commercial polycarbonate based on BPA has a glass transition temperature on the order of 150 °C, for example. It would be of advantage to provide a novel class of polycarbonate polymers of relatively high glass transition temperature and accordingly wider application.

This invention provides novel linear polymers comprising moieties A alternating with moieties B, wherein A has the formula 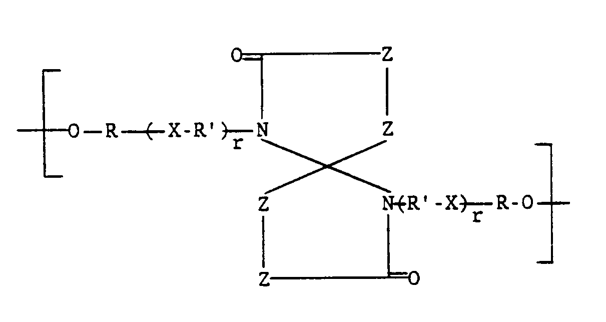
wherein R is aromatic of up to 15 carbon atoms and up to two aromatic rings, R' is R or aliphatic of up to 10 carbon atoms, r is 0 or 1, X is a direct valence bond, alkylene of up to 8 carbon atoms inclusive, oxo, thio, sulfonyl, carbonyl, dioxyphenylene, 2,2-di(oxyphenyl)propane, di(oxyphenyl)sulfone or dioxydiphenylene, Z independently is 〉C(Z')₂ in which Z' independently is hydrogen, C₁-C₄ alkyl or halogen or such that two adjacent Z atoms taken together are part of a benzene ring, and wherein the moieties B are selected from (B₁) carbonyl, (B₂)phenylene-dicarbonyl, (B₃)carbonyl-diphenylene and (B₄)cyanophenylene.

Spirodilactams of a considerable variety of structures are therefore suitably employed as a precursor of the linear alternating copolymers of the invention. In the embodiment of the invention wherein the Z moieties of the spirodilactam are acyclic, i.e., Z is 〉C(Z'), the spirodilactam is illustrated by 1,6-di(4-hydroxyphenyl)-1,6²-diazaspiro[4.4]nonane-2,7-dione - which is most preferred -, 1,6-di(4-hydroxyphenyl)-3,4,8,9-tetrafluoro-1,6-diazaspiro[4.4]nonane-2,7-dione, 1,6-di(3-hydroxy-4-chlorophenyl)-3,8-dimethyl-1,6-diazaspiro[4.4] nonane-2,7-dione, 1,6-di(4-hydroxyphenyl)-3,3,4,4,8,8,9,9-octamethyl-1,6-diazaspiro[4.4]nonane-2,7-dione, 1,6-di[4-(4'-hydroxybiphenyl)]-3,3-diphenyl-1,6-diazaspiro[4.4]nonane-2,7-dione, 1,6-di[2-(4-hydroxyphenyloxy)-propyl]-1,6-diazaspiro[4.4]nonane-2, -dione and 1,6-di[4-(4-hydroxyphenyl-isopropyl)phenyl]-1,6-diazaspiro[4.4]nonane-2,7-dione. In the embodiment wherein adjacent Z groups of the above formula I form a cyclic structure fused to each of the spiro rings, illustrative spirodilactams include 1,6-di(4-hydroxyphenyl)-3,4,8,9-dibenzo-1,6-diazaspiro[4.4]nonane-2,7-dione. Also suitable are the spirodilactams wherein one spiro ring has a fused ring substituent and the other spiro ring is free of fused ring substitutents, e.g., 1,6-di(4-hydroxyphenyl)-3,4-benzo-8-methyl-1,6-diazaspiro[4.4]nonane-2,7-dione and 1,6-di[1-(4-hydroxynaphthyl)]-3,4-di(cyclopentano)-1,6-diazaspiro[4.4]nonane-2,7-dione.

In general, the spirodilactams of the above formula I wherein each R and R'is aromatic and hydrocarbyl are preferred, particularly those compounds wherein each r is 0. Within the spirodilactam portion of the molecule, those spirodilactams where the spiro rings are free from fused cyclic substituents are preferred as are the spirodilactams wherein each spiro ring has a fused cyclic substituent. The 1,6-diazaspiro[4.4]nonane-2,7-diones are the preferred members of the former class whereas 3,4,8,9-dibenzo-1,6-diasaspiro[4.4]nonane-2,7-diones are preferred among the latter class.

The oxyaryl-substituted spirodilactam units A per se do not form part of this invention, neither is the process for their preparation. The general method of producing such spirodilactams comprises the reaction of a hydroxyaryl-containing primary amino compound and a spirodilactam precursor. The hydroxyaryl-containing primary amino compound is represented by the formula 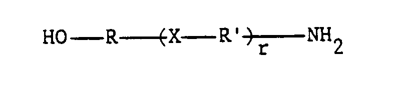
wherein R, R', X and r have the previously stated meanings. The spirodilactam precursor is a 4-oxoheptanedioic acid compound or a 1,6-dioxaspiro[4.4]nonane-2,7-dione. The 4-oxoheptanedioic acid compound precursor of the spirodilactam is represented by the formula 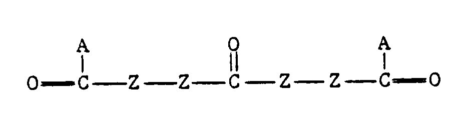
wherein A independently is hydroxy, lower alkoxy of up to 4 carbon atoms inclusive of halo, preferably the middle halogens chloro and bromo, and Z has the previously stated meaning. Likewise, use can be made of a spirodilactone precursor represented by the formula 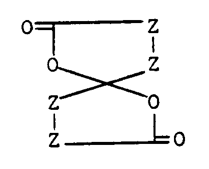
wherein Z has the previously stated meaning.

The acyclic 4-oxoheptanedioic acid compounds are known or are produced by known methods, but certain of the esters are also produced by the reaction of formaldehyde and an ethylenically unsaturated carboxylic acid ester, e.g., methyl acrylate or ethyl methacrylate, in the presence of a catalyst system comprising a thiazolium salt and a tertiary amine. The production of 4-oxoheptanedioic acid compounds which contain cyclic moieties is by the process of Cava et al, J. Am. Chem. Soc., 20, 6022 (1955). The spirodilactone precursors can be produced by the method of Pariza et al, Synthetic Communications, Vol. 13(3), pp. 243-254 (1983) or by the process of U.S. 1,999,181.

Reaction of the hydroxyaryl-containing primary amino compound and the spirodilactam precursor takes place in a liquid phase reaction environment in an inert reaction diluent such as an N-alkylamide such as N,N-dimethylformamide or N,N-dimethylacetamide. The reactants are provided in a molar ratio of 2:1 and reaction occurs at an elevated reaction temperature, e.g., from 80 °C to 250 °C and a reaction pressure sufficient to maintain the reaction mixture in a liquid phase. Subsequent to reaction the hydroxyaryl-containing spirodilactam product is recovered from the product mixture by conventional methods such as solvent removal, precipitation or chromatographic techniques.

The optional reactant in the process for preparing the polymers of this invention is a di(hydroxyphenyl)alkane of up to 25 carbon atoms. Although a considerable variety of such di(hydroxyphenyl)alkanes are useful as optional components of the polycarbonate polymers of the invention, the preferred optional components are represented by the formula 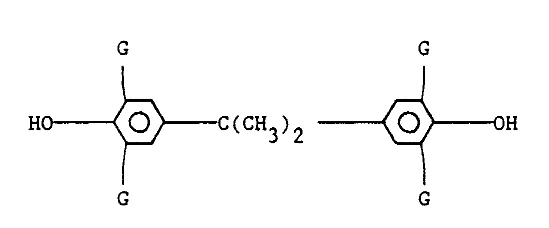
wherein G independently is hydrogen, alkyl, preferably lower alkyl, or halo, preferably the middle halogens chloro or bromo. Illustrative of the di(hydroxyphenyl)alkanes are 2,2-di(4-hydroxyphenyl)propane, 2,2-di(4-hydroxy-3-methylphenyl)propane, 2,2-di(4-hydroxy-3-chlorophenyl)-propane, 2,2-di(4-hydroxy-3,5-dibromophenyl)propane, 2-(4-hydroxyphenyl)-2-(4-hydroxy-3-chloro-5-methylphenyl)propane and 2-(4-hydroxyphenyl)-2-(4-hydroxyphenyl)-2-(4-hydroxy-3,5-dibromophenyl)propane. The preferred di(hydroxyphenyl)alkane compound is 2,2-di(4-hydroxyphenyl)propane. When such compounds participate in the reaction for preparing the polymers ⁅A-B⁆ of this invention, the result will be a polymer in which part of the defined unit A has been replaced by units derived from the coreactant.

When considering the polymers comprising units (B₁), the hydroxyaryl-substituted spirodilactam and, if present, the di(hydroxyphenyl)alkane, are converted to the polycarbonate polymer by reaction of the spirodilactam, and hydroxyphenylalkane if present, or metal salt thereof with a carbonate source. Although other metal salts are usefully employed in the modification where the salts of the hydroxy-containing reaction components are formed, in the preferred modification the spirodilactam and hydroxyphenylalkane, if present, are converted to the alkali metal salt, preferably the sodium salt or the potassium salt, by neutralization with an alkali metal hydroxide, carbonate or bicarbonate while any water present or formed is removed by distillation or by selective extraction. The resulting alkali metal salt or salts are recovered if desired by conventional methods but are also suitably reacted in situ to produce the polycarbonate polymer.

In the modification where no optional polymer component is to be present, i.e., the polycarbonate polymer is a true copolymer, no salt of the hydroxyphenylalkane compound is formed, of course. In the modification where the desired polycarbonate polymer is a terpolymer the salt of the di(hydroxyphenyl)alkane is formed and is present in the reaction mixture. It is useful in such a modification to neutralize a mixture of the hydroxyaryl-substituted spirodilactam and the di(hydroxyphenyl)alkane and thereby form a mixture of salts. Alternatively, however, the salt of the hydroxyaryl-substituted spirodilactam and the salt of the hydroxyphenylalkane are produced separately and subsequently mixed.

The presence of the alkali metal salt in the reaction mixture of the di(hydroxyphenyl)alkane is optional and is not required, but when present the alkali metal salt of the di(hydroxyphenyl)alkane is present in a molar quantity up to twice the molar quantity of the alkali metal salt of the spirodilactam reactant. Preferably, the alkali metal salt of the di(hydroxyphenyl)alkane is present in a molar quantity up to equal that of the alkali metal salt of the hydroxyaryl-substituted spirodilactam.

The alkali metal salt, whether recovered or utilized in situ, is reacted in one modification with phosgene present in a slight molar excess over the total molar quantity of the other reactants. The reaction is conducted in an inert reaction solvent such as methylene chloride and under substantially ambient conditions of temperature and pressure. A quaternary ammonium salt such as tetraethylammonium bromide is optionally employed to facilitate the production of the polycarbonate polymer. The polymeric product thereby produced is recovered by conventional techniques such as solvent removal or precipitation with a non-solvent for the polymer.

In a second modification of the process for the production of the polycarbonate polymer, often preferred in part because of reasons of each of handling the reactants, the polycarbonate polymer is produced by contacting the hydroxyaryl-substituted spirodilactam and di(hydroxyphenyl)alkane, if present, without conversion to a salt, with an amount of a diaryl carbonate ester, particularly diphenyl carbonate, present in an amount approximately equimolar with the total of the other reactants. Such contacting is conducted in the absence of oxygen and preferably in an inert atmosphere. As the temperature of the resulting mixture is raised and the pressure is lowered, the components of the reaction mixture tend to undergo ester exchange and a hydroxyaryl compound, e.g., phenol, is driven from the reaction mixture as by distillation to produce the polycarbonate polymer. Temperatures from 100 °C to 300 °C are suitable for the ester exchange with preferred temperatures being from 150 °C to 250 °C. The process is facilitated by reduced pressure, as by application of a vacuum, and by the presence of acidic or basic catalysts. Acid catalysts are illustrated by sulfonic acids such as p-toluenesulfonic acid or by acidic metal halides such as zinc chloride. Suitable basic catalysts include alkali metals and alkaline earth metals as well as their oxides, hydroxides or amides, or by other metal oxides. A preferred catalyst comprises lead oxide or zinc oxide and particularly mixtures thereof.

The polymers comprising (B₂) phenylene dicarbonyl moieties can be prepared by reacting an alkali metal or ammonium salt of a hydroxyaryl-substituted spirolactam with a diacid halide compound.

The alkali metal salt of the hydroxyaryl-substituted spirodilactam, and, optionally of the di(hydroxyphenyl)compound may be prepared by conventional methods from the hydroxyaryl-substituted spirodilactams or the di(hydroxyphenyl)propane. While lithium, sodium, potassium, rubidium or cesium salts of the hydroxy-containing reactants are usefully employed in the production of polymer, the preferred alkali metal salts are the sodium salt or the potassium salt. In a typical production, the desired spirodilactam is dissolved in a suitable solvent such as 1,1,2-trichloroethane or N-methyl-2-pyrrolidene and an at least stoichiometric quantity of an alkali metal hydroxide, carbonate or bicarbonate is added to produce the alkali metal salt. The salt of the spirodilactam and/or the di(hydroxyphenyl) is recovered, if desired, as by solvent removal but typically it is employed in the reaction with the diacid halide without isolation. In the modification where terpolymer is to be produced, it is useful to produce the alkali metal salt of the hydroxyaryl-substituted spirodilactam and the di(hydroxyphenyl)propane in the same reaction as by contacting a mixture of these hydroxy-containing compounds with alkali metal base. Alternatively, however, the two alkali metal salts are produced separately and subsequently mixed.

The diacid halide reactant is the acid halide of an aromatic dicarboxylic acid of up to 30 carbon atoms having two acid halide moieties as substituents on carbon atoms of aromatic rings. One class of such acid halides is represented by the formula 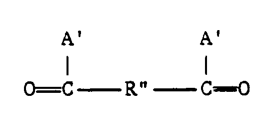
where A' is halogen, preferably middle halogen and particularly chloro, and R'' is phenylene. Illustrative diacid halides include phthaloyl chloride, isophthaloyl chloride, terephthaloyl bromide, di(bromocarbonylphenyl) ketone, and isophthaloyl fluoride. Best results are obtained when the acid halide moieties are substituted on aromatic ring carbon atoms which are meta or para to each other, i.e., an isophthaloyl halide or a terephthaloyl halide.

In part because of the difficulty of employing a reaction diluent in which the alkali metal salt reactant and the diacid halide reactant are soluble, the polymerization is typically conducted under polymerization conditions as an interfactial polymerization, that is, a polymerization that takes place at the interface of two substantially immiscible solvents. In such a polymerization, one type of reactant is customarily present in each of the two solvent phases and reaction is facilitated by utilization of a phase transfer agent such as a quaternary ammonium salt or one of the cyclic large-ring polyethers known as crown ethers. In the case of the reactants of the present invention, the process is efficiently conducted in a reaction environment where one phase is aqueous and the other phase comprises an organic solvent such as 1,1,2-trichloroethane or chloroform. In a particularly preferred embodiment, the hydroxyaryl-substituted spirodilactam, the di(hydroxyphenyl) compound, if present, and an alkali metal hydroxide are added to the solvent system while vigorous stirring or other agitation is maintained. Subsequent to this in situ production of alkali metal salt reactant, the aromatic dicarboxylic acid halide reactant is added, also with agitation, and the polymerization takes place at the phase interface. Trialkylbenzylammonium halides such as triethylbenzylammonium chloride are particularly useful as phase transfer agents in this modification.

The reaction temperature is typically near or below ambient temperature and temperatures from 0 °C to 35 °C are satisfactory. The reaction pressure to be used will be one that is sufficient to maintain the reaction mixture in a liquid state. Such pressures are typically up to 20 atmospheres but more often are from 0.8 atmosphere to 5 atmospheres. Subsequent to reaction the polymer is typically in the organic phase and is recovered therefrom by conventional methods such as selective extraction or precipitation with a non-solvent followed by filtration or decantation.

Polymers of the invention comprising (B₃) carbonyl diphenylene moieties may be produced by reaction of a halo-substituted aryl ketone with a salt, preferably an alkali metal salt, of a hydroxyaryl-substituted 1,6-diaza[4.4]spirodilactam and, optionally a salt of a di(hydroxyphenyl) compound. The halo-substituted aryl ketone reactant of the invention is a compound of from 2 benzene rings connected by a carbonyl group and having a halogen substituent on each of the benzene rings. Examples thereof are di(4-chlorophenyl)ketone, di(2-fluorophenyl)ketone, di(2-chlorophenyl)ketone and di(4-bromophenyl)ketone.

The optional third monomer in the preparation of the copolymers of this invention is a di(hydroxyphenyl) compound of up to 30 carbon atoms and up to 2 aromatic rings as set out hereinbefore.

The polymerization is conducted by contacting the reactants under polymerization conditions in a reaction diluent. Preferred diluents are polar diluents which are capable of dissolving at least a portion of each reactant at polymerization temperature and include glycols, ethers, esters and ketones. In a particularly preferred embodiment the polymerization diluent is the same as the diluent employed in the production of the alkali metal salt, but such is not required.

Polymerization takes place at an elevated temperature, typically from 80 °C to 250 °C but more often from 100 °C to 200 °C. The polymerization pressure is sufficient to maintain the polymerization reaction mixture in the liquid phase at polymerization temperature. Such pressures are up to 20 atmospheres but pressures up to 10 atmospheres are preferred. During the polymerization, reactant contact is maintained by conventional methods such as shaking or stirring and subsequent to reaction the polymer product is recovered by well known techniques such as precipitation, solvent removal or extraction.

The linear polymers of the invention wherein (B₄) is cyanophenylene may be produced by reaction of a salt, particularly an alkali metal salt, of the hydroxyaryl-substituted 1,6-diaza[4.4]spirodilactam and, if present, the di(hydroxyphenyl) compound, with a halo-substituted benzonitrile. Illustrative of the benzonitrile compounds are 2,6-dichlorobenzonitrile, 2,4-dichlorobenzonitrile, 3,5-dibromobenzonitrile, 2,6-dichloro-4-tolunitrile and 2-chloro-6-fluorobenzonitrile. Also in this reaction, the optional coreactant may be a salt of 2,2-(dihydroxyphenyl)propane and similar bisphenols as set out hereinbefore.

Polymerization takes place at the same or similar conditions as set out for the preparation of the alternating copolymer comprising moieties (B₃).

The polymers of this invention are thermoplastic polymers and have the utilities normally associated with thermoplastic polymers. They are processed by the usual methods such as extrusion or injection molding into films, sheets and molded articles of demonstrated utility. In addition, however, because of their relatively high glass transition temperatures, on occasion over 200 °C or even higher, they are also useful as engineering thermoplastics in applications likely to involve exposure to elevated temperature, e.g., containers for food and drink or base materials for electrical or electronic applications.

The invention is further illustrated by the following Examples which should not be construed as limiting the invention.

### Example 1

A mixture of 33.8 g (0.1 mole) of 1,6-di(4-hydroxyphenyl)-1,6-diazaspiro[4.4]nonane-2,7-dione, 25.7 g (0.12 mole) of diphenyl carbonate, 0.02 g of zinc oxide and 0.02 g of lead oxide was melted in a suitable reactor under a nitrogen atmosphere. Phenol was distilled from the mixture at 180 °C and 50 mm. After 0.5 hour, the temperature was raised to 200 °C and the pressure reduced to 15 mm, and after an additional 0.5 hour the pressure was reduced to 2.3 mm. Heating the mixture at 220 °C for 0.5 hour and at 250 °C for an additional 2 hours gave a hard, solid polycarbonate with a glass transition temperature of 223 °C. The nuclear magnetic resonance spectra of the product were consistent with a repeating formula of alternating carbonyl units and units of 1,6-di(4-oxyphenyl)-1,6-diazaspiro[4.4]nonane-2,7-dione.

By way of contrast, the commercial polycarbonate based on 2,2-di(4-hydroxyphenyl)propane marketed by General Electric under the tradename LEXAN (LEXAN is a trade mark) Polycarbonate had a glass transition temperature of 150 °C.

### Example 2

A mixture of 11.4 g (0.05 mole) of 2,2-di(4-hydroxyphenyl)propane, 16.9 g (0.05 mole) of 1,6-di(4-hydroxyphenyl)-1,6-diazaspiro[4.4]nonane-2,7-dione, 25.7 g (0.12 mole) of diphenylcarbonate, 0.02 g of zinc oxide and 0.02 g of lead oxide was melted in a reactor under a nitrogen atmosphere. Phenol was removed from the mixture by distillation at 180 °C and 50 mm. After 0.5 hour, the temperature was raised to 200 °C and the pressure was reduced to 0.15 mm, and after an additional 0.5 hour the pressure was reduced to 2.3 mm. Heating the resulting mixture at 220 °C for 0.5 hour and at 250 °C for an additional 2 hours gave a hard, solid polycarbonate resin with a glass transition temperature of 164 °C. The nuclear magnetic resonance spectra of the product were consistent with a polymer having repeating units of di(4-oxyphenyl)propane and 1,6-di(4-oxyphenyl)-1,6-diazaspiro[4.4]nonane-2,7-dione separated by carbonyl units.

### Example 3

To a 500 ml three-necked flask equipped with a mechanical stirrer, thermometer and nitrogen inlet and outlet were charged 10.14 g (0.03 mole) of 1,6-di(hydroxyphenyl)-1,6-diazaspiro[4.4]nonane-2,7-dione, 0.2 g (0.00009 mole) of triethylbenzylammonium chloride, 0.02 g of sodium bisulfite. 2.64 g (0.066 mole) of sodium hydroxide, 135 ml of distilled water and 70 ml of 1,1,2-trichloroethane. The reaction mixture was stirred at a motor speed of 1200 rpm under nitrogen at a temperature which did not exceed 10 °C. A solution of 6.10 g of isophthaloyl chloride in 40 ml of 1,1,2-trichloroethane was added over a period of 30 minutes. The reaction mixture was then warmed to ambient temperature and maintained at that temperature for four hours. The upper layer was removed by decantation and replaced by 100 ml of distilled water and 30 ml of 1,1,2-trichloroethane. The mixture was then stirred for an additional 20 minutes and the organic layer was then poured into 500 ml of absolute ethanol. The white polymer which precipitated was recovered by filtration, washed with water and dried. The polymer had a glass transition temperature of 231 °C and the nuclear magnetic resonance spectra were consistent with a polymer having alternating units of 1,3-dicarbonylbenzene and of 1,6-di(4-oxyphenyl)-1,6-diazaspiro-[4.4]nonane-2,7-dione.

By way of comparison, a high molecular weight polyacrylate based on 2,2-di(4-hydroxyphenyl)propane (BPA) marketed by Union Carbide under the name ARDEL Polyarylate had a glass transition temperature of 190 °C.

### Example 4

To a 500 ml three-necked flask equipped with a mechanical stirrer, a thermometer and a nitrogen inlet and outlet were charged 5.07 g (0.015 mole) of 1,6-di(4-hydroxyphenyl)-1,6-diazaspiro[4.4]nonane-2,7-dione, 3.42 g (0.015 mole) of 2,2-di(4-hydroxyphenyl)propane, 0.2 g of triethylbenzylammonium chloride, 0.02 g of sodium bisulfite, 2.64 g (0.066 mole) of sodium hydroxide, 135 ml of distilled water and 70 ml of 1,1,2-trichloroethane. The reaction mixture was stirred at a temperature which did not exceed 10 °C. A solution of 6.10 g of isophthaloyl chloride in 40 ml of 1,1,2-trichloroethane was added over a period of 30 minutes. The reaction mixture was then warmed to ambient temperature and maintained at ambient temperature for 4 hours. The upper layer of the resulting mixture was removed by decantation and replaced by 100 ml of distilled water and 30 ml of 1,1,2-trichloroethane. The resulting mixture was stirred for 30 minutes and separated by decantation and the organic layer was poured into 500 ml of absolute ethanol. The white polymer which precipitated was recovered by filtration, washed with water and dried. The polymer had a glass transition temperature of 220 °C and the nuclear magnetic resonance spectra were consistent with a polymer having units of 1,3-dicarbonylbenzene alternating with units of either 1,6-di(4-oxyphenyl)-1,6-diazaspiro[4.4]nonane-2,7-dione or 2,2-di(4-oxyphenyl)propane.

### Example 5

In a 500 ml round-bottom flask equipped with a mechanical stirrer was placed a mixture of 16.9 g (0.05 mole) of 1,6-di(4-hydroxyphenyl)-1,6-diazaspiro[4.4]nonane-2,7-dione, 10.9 g (0.05 mole) of 4,4'-difluorobenzophenone, 7.0 g of potassium carbonate, 100 ml of N-methyl-2-pyrrolidone and 50 ml of toluene. The mixture, while being stirred, was heated to 130 °C-140 °C and the water present or formed was removed by azeotropic distillation. When water removal was complete, the temperature of the mixture was raised to 190 °C-200 °C and maintained for 12 hours while stirring continued. The resulting mixture was then cooled and poured into methanol. The precipitated polymer product was recovered by filtration, pulverized, washed with hot water and then with 2 liters of methanol. The polymer product was then dried in a vacuum oven and when dry was found to have a glass transition temperature of 232 °C. The nuclear magnetic resonance spectra of the product were consistent with a structure of alternating units of di(4-phenylene) ketone and units of 1,6-di(oxyphenyl)-1,6-diazaspiro[4.4]nonane-2,7-dione.

### Example 6

In a 500 ml round-bottom flask equipped with a mechanical stirrer and a nitrogen inlet were placed 16.9 g (0.05 mole) of 1,6-di(4-hydroxyphenyl)-1,6-diazaspiro[4.4]nonane-2,7-dione, 8.6 g (0.05 mole) of 2,6-dichlorobenzonitrile, 7.0 g (0.05 mole) of anhydrous potassium carbonate, 50 ml of toluene and 100 ml of N,N-dimethylacetamide. The mixture was heated with stirring to 130 °C-140 °C and water present or formed during reaction was removed by azeotropic distillation. When water removal was complete, the temperature was raised to 150 °C-155 °C and maintained at that level with stirring for 12 hours. The resulting mixture was cooled and poured into methanol. The precipitated product was recovered by filtration, crumbled, washed with 2 liters of hot water and then 2 liters of methanol and the product was then dried in a vacuum oven. The resulting polymer had a glass transition temperature of 254 °C.

### Example 7

In a 500 ml round-bottom flask equipped with a mechanical stirrer and a nitrogen inlet were placed 16.9 g (0.05 mole) of 1,6-di(4-hydroxyphenyl)-1,6-diazaspiro[4.4]nonane-2,7-dione, 8.6 g (0.05 mole) of 2,6-dichlorobenzonitrile, 7.0 g (0.05 mole) anhydrous potassium carbonate, 50 ml of toluene and 100 ml of N-methyl-2-pyrrolidone. The reaction mixture was heated to 160 °C and stirred until water was essentially completely removed from the mixture by azeotropic distillation. The reaction mixture was further heated at 160 °C until the mixture became viscous when 0.135 g (0.01 mole) of p-chlorobenzonitrile was added to stabilize polymer chain terminals. The resulting mixture was cooled and the solid polymer product was pulverized in water, washed twice with warm methanol, twice with warm water and again with methanol. The resulting polymer, upon drying, was a white polymer, 21.0 g, obtained in 96% yield.

The product had a glass transition temperature of 267 °C and the infrared and nuclear magnetic resonance spectra were consistent with an alternating polymer of 2-cyano-1,3-phenylene units and 1,6-di(4-oxyphenyl)-1,6-diazaspiro[4.4]nonane-2,7-dione units.

### Example 8

In a 5 liter round-bottom flask equipped with a mechanical stirrer and a nitrogen inlet and outlet were placed 159.6 g (0.7 mole) of 2,2-di(4-hydroxyphenyl)propane, 236.6 g (0.7 mole) of 1,6-di(4-hydroxyphenyl)-1,6-diazaspiro[4.4]nonane-2,7-dione, 240.8 g (1.4 mole) of 2,6-dichlorobenzonitrile, 196 g (1.414 mole) of anhydrous potassium carbonate, 400 ml of toluene and 2 liters of N-methyl-2-pyrrolidone. The mixture was stirred while being heated to 160 °C and the water formed was removed by azeotropic distillation. The reaction mixture was maintained at 160 °C until the mixture became viscous at which time 1.93 g (0.014 mole) of p-chlorobenzonitrile was added to stabilize polymeric chain terminals. The resulting mixture was cooled and the solid polymer product was recovered by filtration, pulverized in water, washed twice with warm methanol, twice with warm water and once with methanol. The resulting polymer, upon drying, was a white solid and was obtained in a yield of 99%. The product had a glass transition temperature of 230 °C and the infrared and nuclear magnetic resonance spectra were consistent with the formula of a polymer wherein units of 2-cyano-1,3-phenylene alternate with units of 2,2-di(4-oxyphenyl)propane or 1,6-di(4-oxyphenyl)-1,6-diazaspiro[4.4]nonane-2,7-dione.

## Claims

1. A linear polymer, comprising moieties A alternating with moieties B, wherein A has the formula 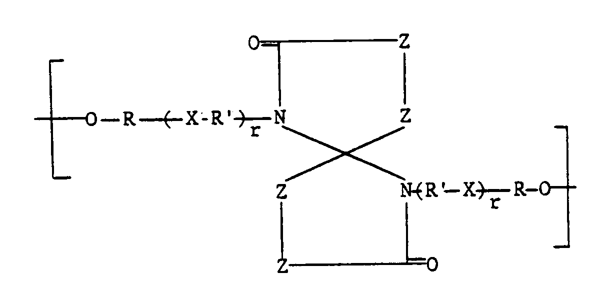 wherein R is aromatic of up to 15 carbon atoms and up to two aromatic rings, R' is R or aliphatic of up to 10 carbon atoms, r is 0 or 1, X is a direct valence bond, alkylene of up to 8 carbon atoms inclusive, oxo, thio, sulfonyl, carbonyl, dioxyphenylene, 2,2-di(oxyphenyl)propane, di(oxyphenyl)sulfone or dioxydiphenylene, Z independently is C(Z')₂ in which Z' independently is hydrogen, C₁-C₄ alkyl or halogen or such that two adjacent Z atoms taken together are part of a benzene ring, and wherein the moieties B are selected from (B₁) carbonyl, (B₂)phenylene-dicarbonyl, (B₃)carbonyl-diphenylene and (B₄)cyanophenylene.

2. The polymer of claim 1 wherein each r is 0 and R is phenylene.

3. A polymer as claimed in claim 1 or 2, in which the units A are units of 1,6-di(4-oxyphenyl)-1,6-diazaspiro[4.4]nonane-2,7-dione.

4. A polymer as claimed in any one of claims 1 to 3, in which part of the units A in the polymer structure has been replaced by units of 2,2-di(4-oxyphenyl)propane.

## Patentansprüche

1. Lineares Polymer, in dem Teile A mit Teilen B abwechseln, wobei A die Formel 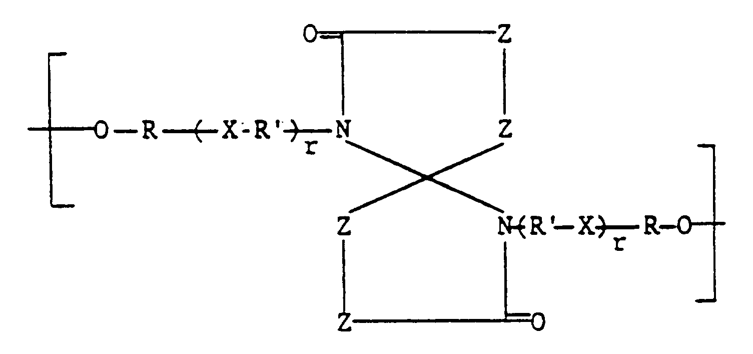 aufweist, wobei R aromatisch mit bis zu 15 Kohlenstoffatomen und bis zu zwei aromatischen Ringen ist, R' gleich R oder aliphatisch mit bis zu 10 Kohlenstoffatomen ist, r gleich 0 oder 1 ist, X eine direkte Valenzbindung, Alkylen mit bis zu einschließlich 8 Kohlenstoffatomen, Oxo, Thio, Sulfonyl, Carbonyl, Dioxyphenylen, 2,2-Bis(oxyphenyl)propan, Bis(oxyphenyl)sulfon oder Dioxydiphenylen bedeutet, Z unabhängig C(Z')₂ darstellt, wobei Z' unabhängig Wasserstoff, C₁-C₄-Alkyl oder Halogen darstellt oder so beschaffen ist, daß zwei benachbarte Z-Atome zusammengenommen Teil eines Benzolrings ausmachen, und wobei die Teile B aus (B₁)-Carbonyl, (B₂)-Phenylendicarbonyl, (B₃)-Carbonyldiphenylen und (B₄)-Cyanphenylen ausgewählt sind.

2. Polymer nach Anspruch 1, wobei r jeweils gleich 0 ist und R Phenylen bedeutet.

3. Polymer nach Anspruch 1 oder 2, bei dem es sich bei den Einheiten A um Einheiten von 1,6-Bis(4-oxyphenyl)-1,6-diazaspiro[4,4]nonan-2,7-dion handelt.

4. Polymer nach einem der Ansprüche 1 bis 3, bei dem ein Teil der Einheiten A in der Polymerstruktur durch Einheiten von 2,2-Bis(4-oxyphenyl)propan ersetzt worden ist.

## Revendications

1. Un polymère linéaire, comprenant des portions A alternant avec des portions B, où A a la formule 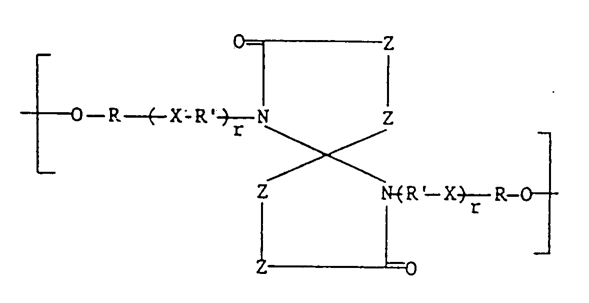 dans laquelle R est un radical aromatique ayant jusqu'à 15 atomes de carbone et jusqu'à 2 noyaux aromatiques, R' est R ou un radical aliphatique ayant jusqu'à 10 atomes de carbone, r est 0 ou 1, X est une liaison de valence directe, un groupe alcoylène de jusqu'à 8 atomes de carbone inclusivement, oxo, thio, sulfonyle, carbonyle, dioxyphénylène, 2,2-di(oxyphényl)propane, di(oxyphényl)sulfone ou dioxydiphénylène, chaque Z indépendamment est 〉C(Z')₂ où chaque Z' indépendamment est de l'hydrogène, un groupe alcoyle en C₁₋₄ ou un halogène ou est tel que deux groupes Z adjacents pris ensemble font partie d'un noyau benzénique, et les portions B sont choisies parmi des portions (B₁) carbonyle, (B₂) phénylène-dicarbonyle, (B₃) carbonyl-diphénylène et (B₄) cyanophénylène.

2. Le polymère selon la revendication 1 dans lequel chaque r est 0 et R est un groupe phénylène.

3. Un polymère selon la revendication 1 ou 2, dans lequel les unités A sont des unités de 1,6-di(4-oxyphényl)-1,6-diazaspiro(4.4)nonane-2,7-dione.

4. Un polymère selon l'une quelconque des revendications 1 à 3, dans lequel une partie des unités A dans la structure du polymère a été remplacée par des unités de 2,2-di(4-oxyphényl)propane.
